# FASCICULE DE BREVET EUROPEEN

(11) **EP 2 374 177 B1**
(45) Date de publication et mention de la délivrance du brevet: **29.05.2013**
(21) Numéro de dépôt: 09796739.2
(22) Date de dépôt: 23.12.2009
(51) Int. Cl.: H01M 4/86, H01M 4/88, H01M 8/12, H01M 4/90

(54) **PROCÉDÉ DE FABRICATION D'UNE ÉLECTRODE CERMET AU NICKEL**
VERFAHREN ZUR HERSTELLUNG EINER NICKEL-CERMET-ELEKTRODE
METHOD FOR MAKING A NICKEL CERMET ELECTRODE

(30) Priorité: 05.01.2009 FR 0900015
(43) Date de publication de la demande: 12.10.2011
(73) Titulaire: Commissariat à l'Énergie Atomique et aux Énergies Alternatives, 75015 Paris (FR)
(72) Inventeur: DELAHAYE, Thibaud, 30330 Tresques (FR); BACLET, Philippe, 21120 IS-SUR-TILLE (FR)
(74) Mandataire: Dubreu, Sandrine
(86) Numéro de dépôt international: PCT/EP2009/067826
(87) Numéro de publication internationale: WO 2010/076274

(56) Documents cités:
- DE-A1- 19 637 261
- US-A- 5 993 988
- US-A1- 2005 095 479
- FUKUI T; OHARA S; NAITO M; NOGI K: "Synthesis of NiO-YSZ composite particles for an electrode of solid oxide fuel cells by spray pyrolysis" POWDER TECHNOLOGY, vol. 132, no. 1, 29 mai 2003 (2003-05-29), pages 52-56, XP002526800

## Description

### Domaine technique de l'invention

L'invention concerne un procédé de fabrication d'une électrode cermet au nickel.

### État de la technique

Le cermet est un matériau composite formé de matériaux céramiques et métalliques. Le cermet au nickel est couramment utilisé pour former des électrodes pour pile à combustible à oxyde solide (SOFC, "Solid Oxid Fuel Cell"), pile à combustible à conducteur protonique (PCFC, " Protonic conductor fuel cell") ou encore des cellules d'électrolyse à oxyde solide (SOEC, "solid oxid electrolysis cell"). De façon conventionnelle, une électrode cermet au nickel est obtenue à partir de poudres d'oxyde de nickel et de céramique par mélange mécanique et/ou broyage. Le mélange est ensuite mis en forme, calciné à haute température pour former le composite et enfin réduit en température pour aboutir à l'électrode cermet au nickel. Les propriétés électriques de l'électrode cermet au nickel dépendent, de façon critique, de la microstructure, de la distribution des particules de nickel et de céramique et de la répartition de la porosité ouverte.

À titre d'exemple, le document US-A-2005/0095479 décrit un procédé de fabrication d'une couche mince poreuse pour électrode SOFC. Le procédé de formation d'un cermet Ni-YSZ comporte le dépôt de nickel ou le co-dépôt avec une céramique Ni-YSZ sur un substrat YSZ suivi d'un recuit ou d'un frittage. Le frittage ou le recuit sous atmosphère réductrice ou oxydante est utilisé pour provoquer la diffusion du métal et contribue à la formation des pores du cermet de Ni.

De récents travaux ont décrits des procédés de fabrication de poudre de composite céramique/NiO pour électrode de SOFC permettant de contrôler la forme, la taille et la distribution des particules formant le composite.

Notamment, le document US-A-5993988 décrit un procédé de fabrication de poudre de céramique composite d'oxyde de nickel NiO et de zircone stabilisé sous forme cristalline cubique avec de l'oxyde d'yttrium (YSZ), à partir d'acétate de nickel tétrahydraté Ni(CH₃COO)₂.4H₂O et d'un sol de YSZ. La formulation des réactifs de départ donne une solution aqueuse de réactifs qui est ensuite décomposée thermiquement par spray pyrolyse. Ce premier traitement thermique donne une poudre intermédiaire constituée de particules de NiO et de YSZ. Lors de la pyrolyse à pulvérisation, la solution aqueuse de réactifs de départ est pulvérisée et séchée. Durant cette étape, les particules d'acétate de nickel ou les particules de YSZ précipitent et s'agglomèrent préférentiellement en fonction de leur solubilité dans la solution aqueuse. Cette précipitation sélective permet d'obtenir une distribution contrôlée de la taille des particules NiO et YSZ. La poudre intermédiaire NiO/YSZ est ensuite mise en forme et frittée pour former l'électrode.

Par ailleurs, dans l'article "Synthesis of NiO-YSZ composite particles for an electrode of solid oxide fuel cells by spray pyrolysis", (Powder Technology, vol. 132, 2003, P.52-56), Fukui et al. font une analyse des mécanismes intervenant dans la décomposition de la solution de départ d'acétate de Ni/YSZ du document US-A-5993988 (résumé) et, notamment, met en évidence la présence lors de la pyrolyse d'un produit intermédiaire formé de grains fins d'acétate de Ni et de YSZ. Ce produit intermédiaire est obtenu à une température supérieure à 200°C.

Les procédés décrits ci-dessus, utilisent de l'oxyde de nickel en poudre, sous forme agglomérée ou pas. Or, l'oxyde de nickel NiO, classé CMR c'est-à-dire cancérigène, mutagène et toxique pour la reproduction, est un composé qui présente une forte toxicité sous forme de poudre. L'utilisation d'un tel composé comme produit de départ ou produit intermédiaire, nécessite sur le plan industriel, des précautions de manipulation, de stockage et d'utilisation complexes et onéreuses.

De plus, de récents travaux ont décrit des procédés de fabrication de cermet au nickel à partir de précurseurs d'oxyde de nickel. Ces précurseurs donnent directement un composite NiO/YSZ où l'oxyde de nickel est piégé dans la matrice constituée par la céramique YSZ et, par conséquent, inoffensif pour l'être humain.

Notamment, le document US-A-2003/0211381 décrit un procédé de fabrication d'une anode cermet au nickel pour SOFC comportant la formation d'une couche poreuse constituée d'un mélange de fibres de zircone et de poudre de zircone stabilisé avec de l'oxyde d'yttrium (YSZ) et l'imprégnation de cette couche poreuse par une solution de nitrate de nickel. Le nitrate de Ni est ensuite transformé en oxyde de nickel par calcination pour former le composite NiO/YSZ. Un cermet au nickel est alors obtenu par réduction, in situ, de l'oxyde de nickel en nickel métallique.

De même, le document US-A-5261944 divulgue la formation d'un composite NiO/YSZ pour la formation d'un matériau anodique d'une pile à combustible, à partir de sels précurseurs : du nitrate de zirconyl et d'yttrium pour le précurseur de YSZ et de l'acétate de nickel pour le précurseur de NiO. Les sels de zirconyl et d'yttrium ainsi que l'acétate de nickel Ni(CH₃COO)₂ sont dissous dans une solution aqueuse d'hydroxyacide, d'amino acide ou d'acide poly(acrylique). L'eau est ensuite éliminée dans des conditions évitant toute décomposition des sels, pour donner un solide friable poreux. Ce dernier est alors calciné à une température comprise entre 800°C et 1000°C pour former le composite NiO/YSZ sous forme de deux phases distinctes, d'oxyde de nickel et de céramique YSZ. Le composite NiO/YSZ est ensuite soumis à un traitement thermique sous atmosphère réductrice pour obtenir un cermet Ni/YSZ. Une anode pour SOFC est alors réalisée par dépôt du composite NiO/YSZ sur un électrolyte solide de YSZ après l'étape de calcination décrite ci-dessus, suivi de la réduction in situ en Ni/YSZ.

Par ailleurs, il est connu que les performances de l'électrode cermet au nickel dépendent de sa structure poreuse. La porosité ouverte de l'électrode pour pile à combustible est essentielle pour le transport des réactifs des combustibles gazeux vers les sites catalytiques et l'évacuation des produits de réaction. Des agents porogènes tels que des billes de polyméthacrylate de méthyle (PMMA), de polyvinyle butyrale (PVB), de cire ou de saccharose sont généralement ajoutés pour obtenir la porosité ouverte requise, comprise généralement entre 30% et 50% volumique. Néanmoins, des opérations supplémentaires de mélange et d'homogénéisation sont alors nécessaires pour contrôler le réseau poreux percolant de l'électrode cermet au Ni.

### Objet de l'invention

L'invention a pour but de proposer un procédé de fabrication d'une électrode cermet au nickel présentant notamment une porosité ouverte, simple à mettre en oeuvre, peu coûteux, et ne nécessitant pas l'utilisation d'oxyde de nickel sous forme pulvérulente.

Selon l'invention, ce but est atteint par un procédé de fabrication selon les revendications indexées.

En particulier, ce but est atteint par un procédé de fabrication d'une électrode cermet au nickel qui comporte les étapes successives suivantes :
- formation à température ambiante d'un mélange comportant un sel organique de nickel à l'état solide, choisi parmi un acétate de nickel, un carbonate de nickel et un tartrate de nickel, et d'au moins un matériau céramique à l'état solide,
- mise en forme du mélange et,
- traitement thermique par frittage dudit mélange mis en forme, pour former l'électrode cermet au nickel, par décomposition thermique du sel organique de nickel.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- La figure 1 représente la variation de masse sous air d'un échantillon d'acétate de nickel tétrahydraté Ni(CH₃COO)₂.4H₂O en fonction de la température.
- La figure 2 représente une photographie vue de dessus d'une bande, acétate de nickel tétrahydraté /YSZ 8% molaire, obtenue par coulage en bande.
- La figure 3 représente une micrographie électronique à balayage en mode électrons secondaires, avec un grossissement X 6500, du cermet obtenu à partir de la bande de la figure 2.
- La figure 4 représente la variation de masse sous air d'un échantillon de carbonate de nickel NiCO₃ en fonction de la température.
- La figure 5 représente une courbe de dilatométrie sous air d'une pastille NiCO₃ - 8YSZ (50/50 %massique) en fonction de la température.
- La figure 6 représente une micrographie électronique à balayage en mode électrons secondaires de la surface de fracture d'une demi-cellule Ni/8YSZ.

### Description des modes de réalisation particuliers de l'invention

Selon un mode de réalisation particulier, le procédé de fabrication d'une électrode cermet au nickel comporte une étape de formation à température ambiante d'un mélange comportant un sel organique de nickel à l'état solide et d'au moins un matériau céramique à l'état solide, suivie de la mise en forme du mélange. Cette étape de mise en forme est destinée à réaliser, avantageusement, une préforme pour donner au mélange une forme proche de celle de l'électrode cermet au nickel finale. On entend par préforme, un mélange mis en forme de sorte qu'il présente une certaine cohésion et des contours et/ou, plus généralement, une forme identique ou proche de ceux de l'électrode cermet au nickel finale. Cette préforme est une ébauche de l'électrode finale, à un stade donné de fabrication du procédé où elle n'a pas encore subi la dernière opération du procédé de fabrication. La mise en forme du mélange, de préférence sous forme d'une préforme, peut être réalisée selon tout procédé connu, par exemple, par pressage et/ou moulage et/ou dépôt et/ou coulée en bande suivie du découpage des bandes. Le mélange mis en forme, constituant éventuellement la préforme, est ensuite traité thermiquement, de préférence dans des conditions réductrices, pour former l'électrode cermet au nickel. Le sel organique de nickel est choisi parmi un acétate de nickel, un carbonate de nickel et un tartrate de nickel, dans leurs structures hydratées ou non. Le sel organique de nickel est, avantageusement, un carbonate de nickel.

Selon un mode de réalisation particulier, le sel organique de nickel est un acétate de nickel. De l'acétate de nickel pulvérulent est mélangé à température ambiante, avantageusement par agitation mécanique, avec un matériau céramique pulvérulent pour former un mélange solide homogène Ni(CH₃COO)₂/céramique. À titre d'exemple, le rapport massique, acétate de Ni/céramique, est choisi de sorte que le cermet au Ni final, obtenu par ce procédé, contienne entre 20% et 70% en poids de nickel métallique. Le matériau céramique est, avantageusement, choisi parmi une zircone stabilisée sous forme cristalline cubique avec de l'oxyde d'yttrium Y₂O₃-ZrO₂ (YSZ), une zircone partiellement stabilisée (PSZ), une zircone scandiée et/ou cériée et un oxyde de cérium CeO₂ substitué comme la cérine gadoliniée (CGO). Un mélange de plusieurs matériaux céramiques pulvérulents peut également être utilisé pour améliorer les performances de l'électrode, par exemple, un mélange de YSZ et de CGO. Le mélange Ni(CH₃COO)₂/céramique est ensuite mis en forme selon tout procédé connu pour former une électrode. À titre d'exemple, le mélange solide homogène peut être pressé pour former une préforme assurant la cohésion du mélange solide homogène. Puis, la préforme est traitée en température par frittage, avantageusement sous conditions réductrices, pour former l'électrode cermet au nickel. Un électrolyte peut ensuite être déposé à la surface de l'électrode cermet au nickel ainsi obtenue.

Selon une variante, le mélange Ni(CH₃COO)₂/céramique peut être mis en forme par moulage suivi d'un pressage pour former une préforme Ni(CH₃COO)₂/céramique.

Selon un second mode de réalisation, le mélange Ni(CH₃COO)₂/céramique est formulé sous forme d'un mélange liquide visqueux pour former une encre ou une pâte, par exemple, avec un alcool tel que du glycérol. L'acétate de nickel et le ou les matériau(x) céramique(s) se trouvent alors à l'état solide dans le mélange Ni(CH₃COO)₂/céramique. Le ou les matériau(x) céramique(s) forment, avantageusement, un sol dans lequel les particules d'acétate de nickel sont en suspension. L'encre ou la pâte est ensuite mise en forme pour former, avantageusement, une préforme notamment par dépôt sur le substrat. Les techniques conventionnelles de dépôt peuvent être utilisées, par exemple, par sérigraphie, pulvérisation, coulage en bande ("tapecasting"), enduction par trempage ("dip coating") ou dépôt à la tournette ("spin coating").

L'acétate de nickel qui constitue un précurseur d'oxyde de nickel NiO est, de préférence, sous forme cristallisée tétrahydraté Ni(CH₃COO)₂.4H₂O.

Le substrat peut être, avantageusement, un électrolyte solide pour une pile à combustible, de préférence, un support dense Y₂O₃-ZrO₂ à 8 % molaire (8YSZ). Après la mise en forme du mélange, un traitement thermique du mélange mis en forme est réalisé, de préférence, dans des conditions réductrices par exemple sous hydrogène (H₂), pour former l'électrode cermet au Ni. Ce traitement thermique assure la cohésion du cermet au Ni et libère une porosité ouverte associée au départ des atomes d'oxygène sous forme gazeuse. Ce traitement thermique est, avantageusement, réalisé à des températures comprises entre 1150°C et 1450°C, plus particulièrement, entre 1200°C et 1300°C.

Selon une variante, lors du traitement thermique de la préforme constituant le mélange mis en forme, l'acétate de nickel est décomposé thermiquement dans des conditions oxydantes. Cette décomposition forme un composite céramique solide NiO/céramique, comportant de l'oxyde de nickel et le ou les matériau(x) céramique(s). L'oxyde de nickel dans le composite NiO/céramique est piégé dans la matrice de céramique et de ce fait inoffensif. L'oxyde de nickel NiO est ensuite réduit en nickel métallique Ni, in situ, dans le composite céramique solide NiO/céramique, pour donner une électrode cermet au Ni. Dans cette variante, le traitement thermique oxydant peut atteindre les températures de 1100°C à 1300°C, tandis que l'étape de réduction du NiO en Ni peut-être effectuée à température moins élevée. Ainsi, un traitement thermique réducteur compris entre 500°C et 1000°C, par exemple 700°C, peut suffire.

La décomposition thermique de l'acétate de Ni permet la création de pores ouverts à proximité des sites catalytiques de nickel dans l'électrode cermet au Ni ainsi obtenue. Les pores constituent, pour les réactifs, des chemins d'accès aux sites catalytiques du nickel. L'activité électrochimique et électrocatalytique de l'électrode cermet au Ni est d'autant plus importante que les pores sont intimement liés aux particules de nickel. L'accès des réactifs vers les sites catalytiques est alors favorisé et les performances de l'électrode améliorées. Par ailleurs, les étapes additionnelles d'homogénéisation et de mélange, imposées par l'utilisation d'agents porogènes, sont évitées.

À titre d'exemple, un mélange solide homogène Ni(CH₃COO)₂.4H₂O /YSZ est obtenu à température ambiante à partir d'une poudre d'acétate de nickel tétrahydraté Ni(CH₃COO)₂.4H₂O et d'une poudre céramique à 3 % molaire Y₂O₃-ZrO₂ (3YSZ) ou 8 % molaire Y₂O₃-ZrO₂ (8YSZ). Le mélange est mis en forme par pressage sous forme de pastille constituant la préforme. L'acétate de nickel tétrahydraté Ni(CH₃COO)₂.4H₂O est ensuite décomposé par traitement thermique de la préforme dans des conditions oxydantes.

La décomposition peut être réalisée en trois étapes successives :
- un premier traitement thermique, réalisé par élévation progressive continue de la température, d'environ 0,4 °C/min, de la température ambiante à une température de 120°C. La température est ensuite maintenue à 120°C durant 1 heure. Ce premier traitement thermique entraîne la déshydratation de l'acétate de nickel tétrahydraté Ni(CH₃COO)₂.4H₂O ;
- un second traitement thermique est réalisé par élévation progressive continue de la température, d'environ 0,6 °C/min, de 120°C à 340°C, suivie d'un palier en température de 1 heure. Un composé intermédiaire basique de type acétate de nickel, 0,86Ni(CH₃COO)₂.0,14Ni(OH)₂, est alors formé puis est décomposé en oxyde de nickel NiO avec formation de porosité ouverte ;
- une calcination est réalisée par élévation progressive continue de la température, d'environ 4,8 °C/min, de 340°C à 1200°C, suivie d'un palier en température de 3 heures. Cette calcination assure une bonne tenue mécanique du composite NiO/YSZ ainsi obtenu.

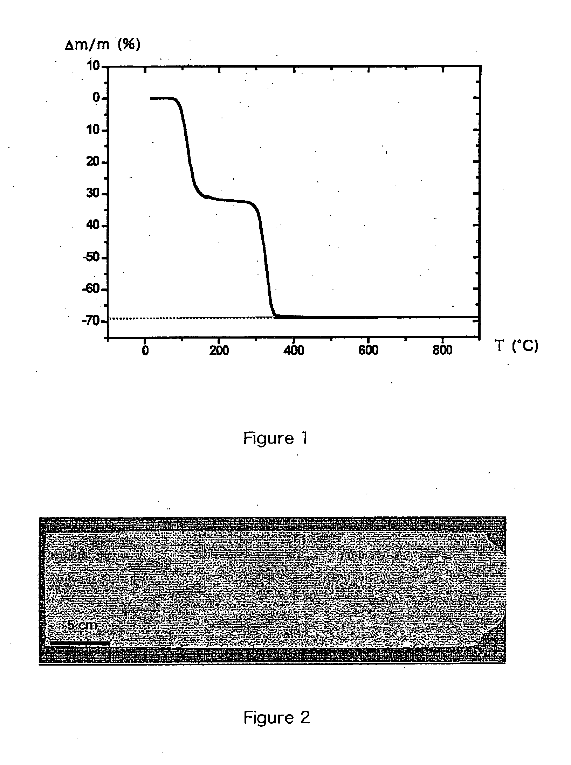

La formation de l'acétate de nickel intermédiaire basique, 0,86Ni(CH₃COO)₂.0,14Ni(OH)₂, a été mise en évidence par analyse thermogravimétrique sous air d'un échantillon de 168,55 mg d'acétate de nickel tétrahydraté Ni(CH₃COO)₂.4H₂O (Figure 1). En effet, la première perte de masse correspond au départ de molécules d'eau et la seconde à la décomposition de l'acétate de nickel intermédiaire basique, 0.86Ni(CH₃COO)₂.0.14Ni(OH)₂, en NiO. Un ultime traitement thermique sous atmosphère réductrice permet de réduire le composite NiO/céramique en cermet Ni/céramique et de libérer une porosité ouverte supplémentaire associée au départ des atomes d'oxygène sous forme gazeuse.

Selon un second exemple, une préparation de coulage en bande à base de 8YSZ et d'acétate de nickel tétrahydraté Ni(CH₃COO)₂.4H₂O a été préparée à partir de 40 g de 8YSZ pulvérulent, 134 g d'acétate de nickel tétrahydraté pulvérulent et 4 g d'acide oléique jouant le rôle de dispersant. Ces réactifs sont intimement mélangés à température ambiante dans une solution azéotrope de solvants, composée de 50 g d'éthanol anhydre et de 50 g de butanone. Ce mélange est agité mécaniquement pendant une heure. Deux plastifiants sont ensuite ajoutés au mélange soit 6 ml de benzyl butyl phtalate et 6.8 mol polyéthylène glycol avec 8 g d'un liant, le polyvinyl butyral. Ce nouveau mélange est ensuite homogénéisé mécaniquement pendant 24h et désaéré. À partir de cette préparation prête à l'emploi, des bandes de quelques centaines de microns d'épaisseur sont coulées en utilisant la technique de coulage en bande puis séchées (figure 2).

Ces bandes Ni(CH₃COO)₂.4H₂O / 8YSZ sont ensuite découpées selon les formes requises pour former les préformes. Les préformes ainsi obtenues par mise en forme du mélange sont ensuite frittées sous air selon le traitement thermique suivant :
- un premier traitement thermique est réalisé par élévation progressive continue de la température, d'environ 0,4 °C/min, de la température ambiante à une température de 120°C, suivie d'un palier en température de 1 heure,
- un second traitement thermique réalisé par élévation progressive continue de la température, d'environ 0,6 °C/min, de 120°C à 340°C, suivie d'un palier en température de 1 heure,
- une calcination réalisée par élévation progressive continue de la température, d'environ 0,4 °C/min, jusqu'à un premier palier en température à 600°C d'une heure suivie d'une élévation progressive continue de la température, d'environ 1,7 °C/min, jusqu'à un second palier en température à 1200°C de 3 heures et,
- un refroidissement réalisé par diminution progressive continue de la température, d'environ 5 °C/min, jusqu'à une température de 25°C.

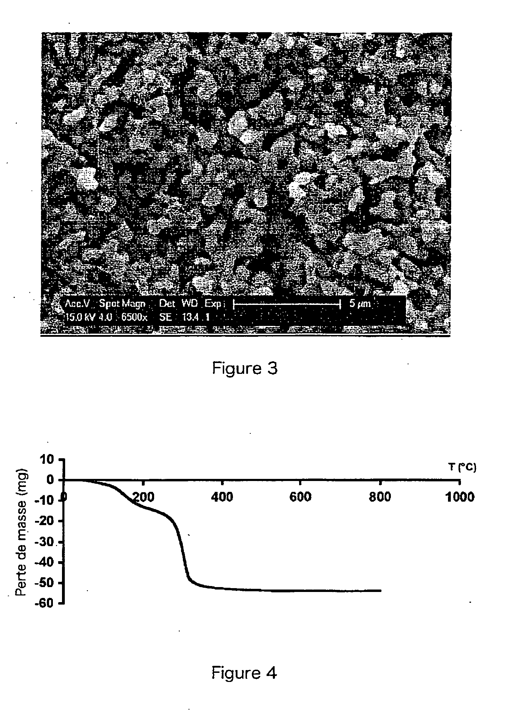

Des substrats composites NiO/8YSZ sont alors obtenus qui donnent après réduction en température sous atmosphère réductrice des cermets Ni/8YSZ présentant une structure cohérente et poreuse avec une porosité ouverte comme le montre la micrographie électronique à la figure 3 réalisée avec un microscope MEB XL30 (Phillips).

Selon un troisième mode de réalisation particulier, le sel organique de nickel à l'état solide est un carbonate de nickel NiCO₃.

Une analyse thermogravimétrique a été réalisée sous air d'un échantillon de 89.9 mg de carbonate de nickel (figure 4). Comme représenté à la figure 4, on obtient une courbe présentant deux points d'inflexion successifs à environ 100°C et environ 300°C. La première perte de masse (∼100°C) correspond à la déshydratation du carbonate de nickel avec départ de molécules d'eau et la seconde perte de masse (-300°C) qui se prolonge jusqu'à 600°C correspond à l'oxydation totale du carbonate de nickel en oxyde de nickel. La réaction d'oxydation est représentée par la formule (1) suivante:

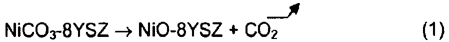

Lors du procédé de fabrication de l'électrode cermet au nickel, la transformation de NiCO₃ en NiO peut donc avoir lieu au cours du traitement thermique, après la mise en forme du mélange, sans qu'un traitement thermique supplémentaire particulier soit nécessaire.

À titre d'exemple, une pastille NiCO₃/8YSZ a été réalisée par mélange à température ambiante d'une poudre de NiCO₃ et d'une poudre céramique 8YSZ dans des proportions 50/50 en pourcentage massique suivi par une mise en forme par pressage sous forme d'une pastille du mélange NiCO₃/8YSZ. Une courbe de dilatométrie sous air a été réalisée à partir de cette pastille sur une gamme de température allant de la température ambiante à 1400°C.

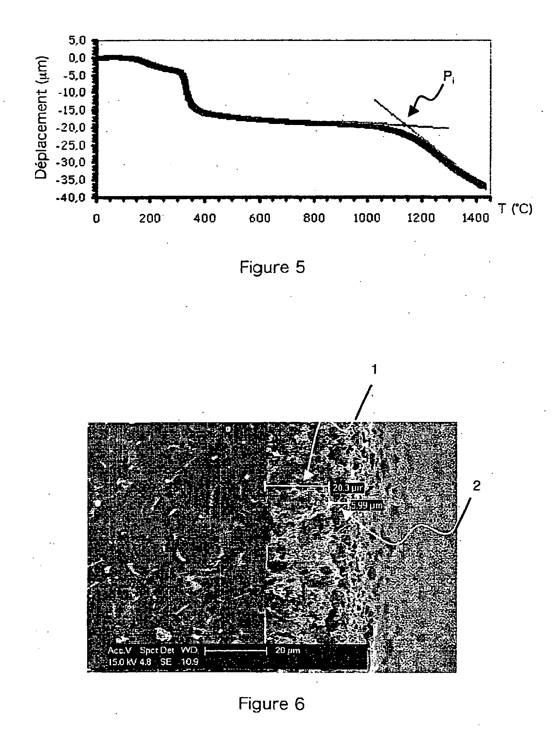

Comme représenté à la figure 5, on obtient une courbe de dilatométrie présentant des deux points d'inflexion entre environ 100°C et environ 300°C correspondant respectivement à la déshydratation du mélange NiCO₃/8YSZ suivie de la transformation du carbonate de nickel NiCO₃ en oxyde de nickel NiO, comme illustré par l'analyse thermogravimétrique décrite ci-dessus (figure 4). Ces points d'inflexion traduisent une première compression importante de l'échantillon du fait d'une perte importante de masse liée à la décomposition du carbonate de nickel en oxyde de nickel moins volumineux. Un troisième point d'inflexion noté Pᵢ est également observé entre 1100°C et 1200°C. Ce troisième point d'inflexion correspond à une contraction de l'échantillon liée au début d'une densification de l'échantillon. Deux tangentes ont été tracées (figure 5) afin de déterminer précisément ce point d'inflexion qui se situe à environ 1160°C. On en déduit qu'en se plaçant à 1200°C, l'électrode cermet au nickel aura donc suffisamment de cohésion tout en conservant une porosité ouverte. Au-delà de 1200°C, l'électrode cermet au nickel ne conservera pas sa porosité ouverte et perdra de son efficacité.

À titre d'exemple, une demi-cellule électrode/électrolyte a été réalisée à partir de deux encres de sérigraphie. Une première encre de sérigraphie a été réalisée à partir d'un mélange formé avec 8g de NiCO₃ pulvérulent et 5g de 8YSZ pulvérulent et 1 g d'acide oléique jouant le rôle de dispersant. Ces réactifs sont intimement mélangés à température ambiante dans une solution azéotrope de solvants composée de 50 g terpinéol et de 50 g de glycérol. Ce mélange est agité mécaniquement à température ambiante pendant 6 heures. Un plastifiant est ensuite ajouté au mélange soit 5% massique d'éthylcellulose. Ce nouveau mélange est ensuite homogénéisé mécaniquement à température ambiante pendant 6 heures et désaéré pendant 24H.

Une seconde encre de sérigraphie a été réalisée avec du NiCO₃ pur. Chaque encre forme un mélange liquide visqueux dans lequel les particules de 8YSZ et/ou de NiCO₃ sont à l'état solide. Les encres ainsi formées sont mises en forme par sérigraphie puis traitées thermiquement.

La mise en forme comporte trois dépôts successifs de la première encre par sérigraphie à la surface d'un électrolyte en 8YSZ suivis de deux dépôts de la seconde encre. Entre chaque dépôt, un traitement thermique à 44°C a été réalisé afin d'éliminer une partie des solvants utilisés. La demi-cellule ainsi formée est traitée thermiquement par frittage sous air durant 3 heures à 1200°C pour former le composite massif NiO/8YSZ puis est réduite 3 heures à 800°C sous flux d'un mélange argon/H₂ (2%) afin de former le cermet massif poreux Ni/8YSZ. Les trois dépôts de sérigraphie de la première encre (mélange initial NiCO₃/8YSZ) constitue la couche fonctionnelle Ni/8YSZ de la demi-cellule électrode/électrolyte et les deux dépôts de sérigraphie de la seconde encre (NiCO₃) constituent la couche collectrice Ni. La surface de fracture de la demi-cellule électrode/électrolyte ainsi préparée est observée au Microscope Electronique à Balayage (MEB) en mode électrons secondaires (figure 6).

Sur cette micrographie représentée à la figure 6, la couche fonctionnelle 1 et la couche collectrice 2 sont bien visibles et mesurent respectivement environ 20 µm et environ 6 µm. La micrographie montre à l'interface électrode/électrolyte une très bonne cohésion entre l'électrode cermet et l'électrolyte ainsi qu'une porosité ouverte caractéristique.

Le procédé de fabrication selon la présente invention est particulièrement avantageux pour la fabrication d'électrode cermet au nickel pour pile à combustible de type SOFC nécessitant une bonne porosité. Il met en oeuvre des opérations courantes simples et faciles à mettre en oeuvre, sans utiliser de réactifs de départ toxiques tels que l'oxyde de nickel en poudre. Les précautions de manipulation coûteuses, imposées par l'utilisation de NiO en poudre sont, par conséquent, évitées.

## Revendications

1. Procédé de fabrication d'une électrode cermet au nickel **caractérisé en ce qu'**il comporte les étapes successives suivantes :
- formation à température ambiante d'un mélange comportant un sel organique de nickel à l'état solide, choisi parmi un acétate de nickel, un carbonate de nickel et un tartrate de nickel, et d'au moins un matériau céramique à l'état solide,
- mise en forme dudit mélange et,
- traitement thermique par frittage dudit mélange mis en forme, pour former l'électrode cermet au nickel par décomposition thermique du sel organique de nickel.

2. Procédé de fabrication selon la revendication 1, **caractérisé en ce que** le traitement thermique est réalisé dans des conditions réductrices.

3. Procédé de fabrication selon la revendication 1, **caractérisé en ce qu'**il comporte les étapes successives suivantes :
- formation à température ambiante d'un mélange comportant un sel organique de nickel à l'état solide et d'au moins un matériau céramique à l'état solide,
- mise en forme du mélange et,
- traitement thermique dudit mélange mis en forme, dans des conditions oxydantes, pour former un composite céramique solide comportant de l'oxyde de nickel et le matériau céramique et,
- réduction, dans le composite céramique solide, de l'oxyde de nickel en nickel métallique.

4. Procédé de fabrication selon l'une quelconque des revendications 1 à 3, **caractérisé en ce que** le mélange est un mélange solide homogène obtenu par mélange du sel organique de nickel pulvérulent et du matériau céramique pulvérulent.

5. Procédé de fabrication selon l'une quelconque des revendications 1 à 4, **caractérisé en ce que** le mélange est un mélange liquide visqueux formant une encre ou une pâte.

6. Procédé de fabrication selon l'une quelconque des revendications 1 à 5, **caractérisé en ce que** la mise en forme du mélange comporte le dépôt dudit mélange sur un substrat.

7. Procédé de fabrication selon la revendication 6, **caractérisé en ce que** le substrat est un électrolyte solide.

8. Procédé de fabrication selon l'une quelconque des revendications 1 à 7, **caractérisé en ce que** le matériau céramique est choisi parmi une zircone stabilisée sous forme cristalline cubique avec de l'oxyde d'yttrium Y₂O₃-ZrO₂ (YSZ), une zircone partiellement stabilisée (PSZ), une zircone scandiée et/ou cériée et un oxyde de cérium CeO₂ substitué.

9. Procédé de fabrication selon l'une quelconque des revendications 1 à 8, **caractérisé en ce que** le sel organique de nickel est de l'acétate de nickel sous forme cristallisée tétrahydratée Ni(CH₃COO)₂.4H₂O.

10. Procédé de fabrication selon l'une des revendications 8 et 9, **caractérisé en ce que** le mélange est un mélange Ni(CH₃COO)₂.4H₂O / YSZ.

11. Procédé de fabrication selon l'une quelconque des revendications 9 et 10, **caractérisé en ce que** la décomposition thermique du sel organique de nickel est réalisée en trois étapes successives suivantes :
- un premier traitement thermique jusqu'à 120°C,
- un second traitement thermique jusqu'à 340°C,
- une calcination jusqu'à 1200°C.

12. Procédé de fabrication selon la revendication 11, **caractérisé en ce que** :
- le premier traitement thermique est réalisé par élévation progressive continue de la température, de la température ambiante à une température de 120°C, suivie d'un palier en température de 1 heure,
- le second traitement thermique est réalisé par élévation progressive continue de la température, de 120°C à 340°C, suivie d'un palier en température de 1 heure,
- la calcination est réalisée par élévation progressive continue de la température, de 340°C à 1200°C, suivie d'un palier en température de 3 heures.

13. Procédé de fabrication selon la revendication 11, **caractérisé en ce que** :
- le premier traitement thermique est réalisé par élévation progressive continue de la température, de la température ambiante à une température de 120°C, suivie d'un palier en température de 1 heure,
- le second traitement thermique est réalisé par élévation progressive continue de la température, de 120°C à 340°C, suivie d'un palier en température de 1 heure,
- la calcination est réalisée par élévation progressive continue de la température jusqu'à un premier palier en température à 600°C d'une heure suivie d'une élévation progressive continue de la température jusqu'à un second palier en température à 1200°C de 3 heures.

## Patentansprüche

1. Verfahren zur Herstellung einer Nickel-Cermet-Elektrode, **dadurch gekennzeichnet, dass** es die folgenden aufeinanderfolgenden Schritte umfasst:
- Ausbilden eines Gemischs bei Raumtemperatur, das ein organisches Nickelsalz in festem Zustand, welches aus einem Nickelacetat, einem Nickelcarbonat und einem Nickeltartrat ausgewählt ist, sowie wenigstens ein Keramikmaterial in festem Zustand umfasst,
- Informbringen des Gemischs und
- Wärmebehandeln des in Form gebrachten Gemischs mittels Sintern, um die Nickel-Cermet-Elektrode durch thermische Zersetzung des organischen Nickelsalzes zu bilden.

2. Herstellungsverfahren nach Anspruch 1, **dadurch gekennzeichnet, dass** die Wärmebehandlung unter reduzierenden Bedingungen durchgeführt wird.

3. Herstellungsverfahren nach Anspruch 1, **dadurch gekennzeichnet, dass** es die folgenden aufeinanderfolgenden Schritte umfasst:
- Ausbilden eines Gemischs bei Raumtemperatur, das ein organisches Nickelsalz in festem Zustand sowie wenigstens ein Keramikmaterial in festem Zustand umfasst,
- Informbringen des Gemischs und
- Wärmebehandeln des in Form gebrachten Gemischs unter oxidierenden Bedingungen, um einen festen Keramik-Verbundwerkstoff, der Nickeloxid und das Keramikmaterial umfasst, zu bilden, und
- Reduzieren, in dem festen Keramik-Verbundwerkstoff, des Nickeloxids zu metallischem Nickel.

4. Herstellungsverfahren nach einem der Ansprüche 1 bis 3, **dadurch gekennzeichnet, dass** das Gemisch ein homogenes festes Gemisch ist, das durch Mischen des pulverförmigen organischen Nickelsalzes und des pulverförmigen Keramikmaterials erhalten wird.

5. Herstellungsverfahren nach einem der Ansprüche 1 bis 4, **dadurch gekennzeichnet, dass** das Gemisch ein viskoses flüssiges Gemisch, das eine Tinte oder eine Paste bildet, ist.

6. Herstellungsverfahren nach einem der Ansprüche 1 bis 5, **dadurch gekennzeichnet, dass** das Informbringen des Gemischs das Auftragen des Gemischs auf einem Substrat umfasst.

7. Herstellungsverfahren nach Anspruch 6, **dadurch gekennzeichnet, dass** das Substrat ein fester Elektrolyt ist.

8. Herstellungsverfahren nach einem der Ansprüche 1 bis 7, **dadurch gekennzeichnet, dass** das Keramikmaterial aus einem mit Yttriumoxid stabilisierten Zirkonoxid in kubischer kristalliner Form Y₂O₃-ZrO₂ (YSZ), einem teilstabilisierten Zirkonoxid (PSZ), einem Scandium- und/oder Cer-stabilisierten Zirkonoxid und einem substituierten Ceroxid CeO₂ ausgewählt ist.

9. Herstellungsverfahren nach einem der Ansprüche 1 bis 8, **dadurch gekennzeichnet, dass** das organische Nickelsalz Nickelacetat in kristallisierter tetrahydratisierter Form Ni(CH₃COO)₂.4H₂O ist.

10. Herstellungsverfahren nach einem der Ansprüche 8 und 9, **dadurch gekennzeichnet, dass** das Gemisch ein Ni(CH₃COO)₂.4H₂O / YSZ -Gemisch ist.

11. Herstellungsverfahren nach einem der Ansprüche 9 und 10, **dadurch gekennzeichnet, dass** die thermische Zersetzung des organischen Nickelsalzes in den drei folgenden aufeinanderfolgenden Schritten vollzogen wird:
- einer ersten Wärmebehandlung bis zu 120 °C,
- einer zweiten Wärmebehandlung bis zu 340 °C,
- einer Kalzinierung bis zu 1200 °C.

12. Herstellungsverfahren nach Anspruch 11, **dadurch gekennzeichnet, dass**:
- die erste Wärmebehandlung durch schrittweise, kontinuierliche Temperaturerhöhung von der Raumtemperatur auf eine Temperatur von 120 °C, an die sich ein Temperaturniveau von 1 Stunde anschließt, durchgeführt wird,
- die zweite Wärmebehandlung durch schrittweise, kontinuierliche Erhöhung der Temperatur von 120 °C auf 340 °C, an die sich ein Temperaturniveau von 1 Stunde anschließt, durchgeführt wird,
- die Kalzinierung durch schrittweise, kontinuierliche Erhöhung der Temperatur von 340 °C auf 1200 °C, an die sich ein Temperaturniveau von 3 Stunden anschließt, durchgeführt wird.

13. Herstellungsverfahren nach Anspruch 11, **dadurch gekennzeichnet, dass**
- die erste Wärmebehandlung durch schrittweise, kontinuierliche Temperaturerhöhung von der Raumtemperatur auf eine Temperatur von 120 °C, an die sich ein Temperaturniveau von 1 Stunde anschließt, durchgeführt wird,
- die zweite Wärmebehandlung durch schrittweise, kontinuierliche Erhöhung der Temperatur von 120 °C auf 340 °C, an die sich ein Temperaturniveau von 1 Stunde anschließt, durchgeführt wird,
- die Kalzinierung durch schrittweise, kontinuierliche Erhöhung der Temperatur bis zu einem ersten Temperaturniveau auf 600 °C von einer Stunde, woran sich eine schrittweise, kontinuierliche Erhöhung der Temperatur bis zu einem zweiten Temperaturniveau auf 1200 °C von 3 Stunden anschließt, durchgeführt wird.

## Claims

1. A method for fabricating a nickel-cermet electrode **characterized in that** it comprises the following successive steps:
- formation at ambient temperature of a mixture comprising an organic nickel salt in solid state, chosen among nickel acetate, nickel carbonate, nickel tartrate, and at least one ceramic material in solid state,
- shaping of the said mixture and,
- heat treatment by sintering of said shaped mixture to form the nickel-cermet electrode by thermal decomposition of organic nickel salt.

2. The method for fabricating according to claim 1, **characterized in that** heat treatment is performed under reducing conditions.

3. The method for fabricating according to claim 1, **characterized in that** it comprises the following successive steps:
- formation at ambient temperature of a mixture comprising an organic nickel salt in solid state and at least one ceramic material in solid state,
- shaping of the mixture and,
- heat treatment of said shaped mixture, under oxidizing conditions, to form a solid ceramic composite comprising nickel oxide and the ceramic material and,
- reduction, in the solid ceramic composite, of nickel oxide into metallic nickel.

4. The method for fabricating according to any one of claims 1 to 3, **characterized in that** the mixture is a homogeneous solid mixture obtained by mixing powdery organic nickel salt and powdery ceramic material.

5. The method for fabricating according to any one of claims 1 to 4, **characterized in that** the mixture is a viscous liquid mixture forming an ink or a paste.

6. The method for fabricating according to any one of claims 1 to 5, **characterized in that** shaping of the mixture comprises deposition of said mixture on a substrate.

7. The method for fabricating according to claim 6, **characterized in that** the substrate is a solid electrolyte.

8. The method for fabricating according to any one of claims 1 to 7, **characterized in that** the ceramic material is chosen from a zircon stabilized in cubic crystalline form with yttrium oxide Y₂O₃-ZrO₂ (YSZ), a partially stabilized zircon (PSZ), a scandiated and/or ceriated zircon and a substituted cerium oxide CeO₂.

9. The method for fabricating according to any one of claims 1 to 8, **characterized in that** the organic nickel salt is nickel acetate in tetrahydrated crystallized form Ni(CH₃COO)₂.4H₂O.

10. The method for fabricating according to one of claims 8 and 9, **characterized in that** the mixture is a Ni(CH₃COO)₂.4H₂O / YSZ mixture.

11. The method for fabricating according to one of claims 9 and 10, **characterized in that** thermal decomposition is performed in the following successive steps :
- a first heat treatment up to 120°C,
- a second heat treatment up to 340°C,
- calcination up to 1200°C.

12. The method for fabricating according to claim 11, **characterized in that**:
- the first heat treatment is performed by continuous progressive increase of the temperature, from ambient temperature to a temperature of 120°C, followed by a temperature plateau of 1 hour,
- the second heat treatment is performed by continuous progressive increase of the temperature, from 120°C to 340°C, followed by a temperature plateau of 1 hour,
- calcination is performed by continuous progressive increase of the temperature, from 340°C to 1200°C, followed by a temperature plateau of 3 hours.

13. The method for fabricating according to claim 11, **characterized in that**:
- the first heat treatment is performed by continuous progressive increase of the temperature, from ambient temperature to a temperature of 120°C, followed by a temperature plateau of 1 hour,
- the second heat treatment is performed by continuous progressive increase of the temperature, from 120°C to 340°C, followed by a temperature plateau of 1 hour,
- calcination is performed by continuous progressive increase of the temperature up to a first temperature plateau at 600°C of one hour followed by a continuous progressive increase of the temperature up to a second temperature plateau at 1200°C of 3 hours.
